Europäisches Patentamt
European Patent Office
Office européen des brevets

(19) (11) Numéro de publication: **0 216 671 A1**

(12) **DEMANDE DE BREVET EUROPEEN**

(21) Numéro de dépôt: 86401861.9

(22) Date de dépôt: 22.08.86

(51) Int. Cl.4: **C 09 K 19/48**

(30) Priorité: 26.08.85 FR 8512726

(43) Date de publication de la demande: 01.04.87 Bulletin 87/14

(84) Etats contractants désignés: CH DE GB IT LI NL

(71) Demandeur: COMMISSARIAT A L'ENERGIE ATOMIQUE
Etablissement de Caractère Scientifique Technique et Industriel
31/33, rue de la Fédération
F-75015 Paris (FR)

(72) Inventeur: Butez, Marc
11, rue de Sault
F-38000 Grenoble (FR)

Rabas, Laurence
270, Avenue Ambroise Croizat
F-38400 Saint-Martin-d'Heres (FR)

Vinet, Françoise
52, rue Thiers
F-38000 Grenoble (FR)

(74) Mandataire: Mongrédien, André et al
c/o BREVATOME 25, rue de Ponthieu
F-75008 Paris (FR)

(54) **Mélange de cristaux liquides contenant une base de schiff.**

(57) L'invention a pour objet un mélange de cristaux liquides comportant une base de Schiff.

Ce mélange de cristaux liquides est constitué par :
- au moins une base de Schiff répondant à la formule :

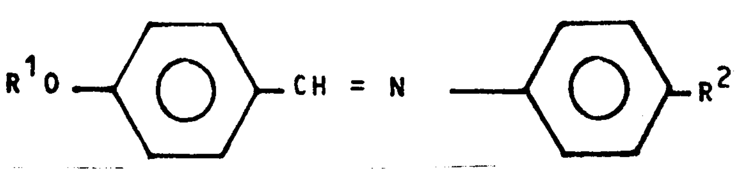

(I)

dans laquelle $R^1$ et $R^2$ qui peuvent être identiques ou différents, sont des radicaux alkyle de 1 à 7 atomes de carbone, et
- au moins un composé choisi parmi :

a) les alkyl bicyclooctane carboxylates d'alkyl fluorophényle,

b) les biphénylbicyclohexyldialkyle,

c) les alkylcyclohexylcarboxylates de dicyanoalcoxyphényle,

d) les bicyclohexylcarbonitrile dialkyle.

L'utilisation de tels mélanges permet l'obtention d'un taux de multiplexabilité élevé dans les dispositifs d'affichage mettant en jeu l'effet de biréfringence contrôlée électriquement.

EP 0 216 671 A1

**Description**

MELANGE DE CRISTAUX LIQUIDES CONTENANT UNE BASE DE SCHIFF

La présente invention a pour objet un mélange de cristaux liquides nématiques, utilisables dans des dispositifs mettant en jeu l'effet de biréfringence contrôlé électriquement.

Dans certains dispositifs à cristaux liquides, l'effet électro-optique utilisé est la biréfringence contrôlée électriquement (BCE). Cet effet correspond à une déformation sous champ électrique d'une phase nématique à anisotropie diélectrique $\Delta\varepsilon$ négative, $\Delta\varepsilon$ représentant la différence entre la constante diélectrique $\varepsilon_a$ parallèle au grand axe moléculaire du cristal et la constante diélectrique $\varepsilon_b$ perpendiculaire à ce grand axe.

Dans les dispositifs à cristaux liquides, il est nécessaire d'utiliser des matériaux nématiques permettant un taux élevé de multiplexage, c'est-à-dire un nombre important de lignes de l'écran adressables électriquement afin de visualiser un haut taux d'informations. Ce taux de multiplexage k peut s'exprimer en fonction de la tension appliquée aux bornes du dispositif (V) et de la tension de seuil de déformation du cristal ($V_S$) par la formule :

$$k < \left(\frac{V^2 + V_S^2}{V^2 - V_S^2}\right)^2$$

Pour un taux de multiplexage donné, il est nécessaire d'avoir un angle de basculement moléculaire ($\Phi_M$) au centre de la cellule le plus grand possible pour obtenir le meilleur contraste entre les deux états noir et blanc du cristal sous l'action du champ électrique. Pour de faibles angles de basculement $\Phi_M$ est directement liée à la tension de seuil de déformation du cristal $V_S$ et au rapport des constantes élastiques de flexion $K_{33}$ et d'éventail $K_{11}$ du cristal liquide. En effet, $\Phi_M$ est donné par la formule :

$$\Phi_M = \frac{V^2 - V_S^2}{V^2\left(\frac{2}{3} + \left|\frac{\Delta\epsilon}{\epsilon_{/\!/}}\right|\right) - \eta_{31} V_S^2}$$

avec $V_S = 2\pi\sqrt{\frac{\pi K_{33}}{|\Delta\epsilon|}}$

$\Delta\epsilon = \epsilon_a - \epsilon_b$

dans laquelle $\eta_{31} = \frac{1-K_{33}}{K_{11}}$

Dans ces conditions, la biréfringence induite électriquement est alors de la forme :

$$\Delta n = \left(\frac{\sin^2\Phi}{n_o^2} + \frac{\cos^2\Phi}{n_e^2}\right)^{1/2} - n_0$$

dans laquelle $\Phi$ est lié à $\Phi_M$ par $\Phi \simeq \Phi_M \cos\frac{\pi}{e} Z$, dans laquelle $n_e$ et $n_o$ sont les indices extraordinaire et ordinaire du cristal, e l'épaisseur du cristal liquide et Z sa position dans la cellule.

L'intensité relative transmise par le dispositif à cristal liquide entre deux polariseurs croisés est donnée par la relation :

$$\frac{I}{I_0} = \sin^2 \pi \frac{\Delta n\ e}{\lambda}$$

dans laquelle $\Delta n$ est égal à $n_e$-$n_o$, et $\lambda$ est la longueur d'onde du faisceau lumineux éclairant le dispositif. Il en résulte que les paramètres les plus importants du matériau sont

$$\frac{K_{33}}{K_{11}}$$

$\Delta n$, $\Delta\varepsilon$ ainsi que la gamme de mésomorphisme $\Delta T$ du cristal.

Parmi ces paramètres, le rapport

$$\frac{K_{33}}{K_{11}}$$

joue un rôle important car il détermine la raideur de la pente de la courbe de transfert électro-optique et donc la multiplexabilité du matériau utilisé ; aussi, ce rapport doit être le plus grand possible. De même, les valeurs de $\Delta n$ et de $\Delta\varepsilon$ sont importantes pour obtenir le taux de multiplexabilité voulue. Généralement, on recherche le meilleur compromis entre toutes ces valeurs.

Les cristaux liquides nématiques utilisés actuellement dans des dispositifs à cristaux liquides mettant en jeu l'effet de biréfringence contrôlé électriquement, présentent généralement une multiplexabilité de l'ordre de 1/250, avec des rapports $K_{33}/K_{11}$ de l'ordre de 1 à 1,2. Cependant, il serait intéressant de disposer de matériaux ayant, soit une meilleure multiplexabilité à contraste et angle de vue identiques, soit une multiplexabilité équivalente, mais obtenue avec des tensions de commande plus faibles, par exemple inférieures à 40 volts efficaces.

La présente invention a précisément pour objet des mélanges de cristaux liquides présentant ces caractéristiques améliorées.

Le mélange de cristaux liquides nématiques selon l'invention est constitué par :

- au moins une base de Schiff répondant à la formule :

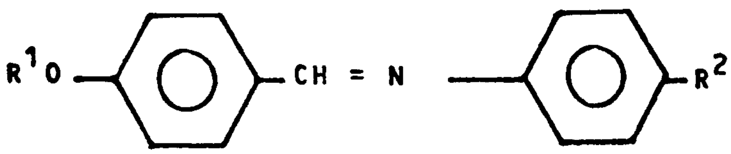

(I)

dans laquelle $R^1$ et $R^2$ qui peuvent être identiques ou différents, sont des radicaux alkyle de 1 à 7 atomes de carbone, et

- au moins un composé choisi parmi :

a) les akylbicyclooctane carboxylates d'alkyl fluorophényle de formule :

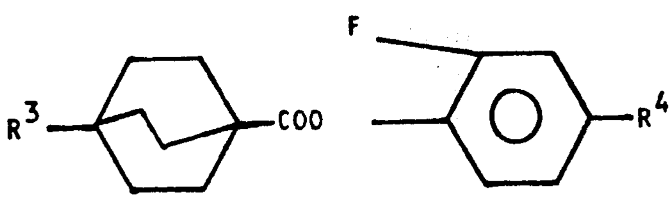

(II)

dans laquelle $R^3$ et $R^4$ qui peuvent être identiques ou différents, sont des radicaux alkyle de 1 à 7 atomes de carbone,

b) les biphénylbicyclohexyldialkyle de formule :

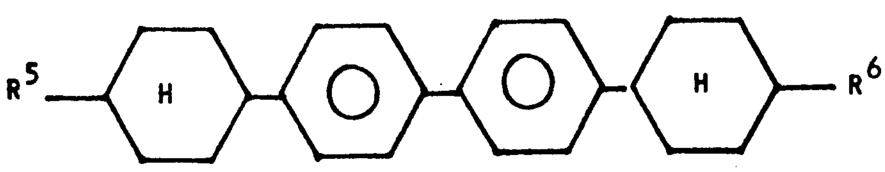

(III)

dans laquelle $R^5$ et $R^6$ sont des radicaux alkyle de 1 à 7 atomes de carbone,

c) les alkylcyclohexylcarboxylates de dicyanoalcoxyphényle répondant à la formule :

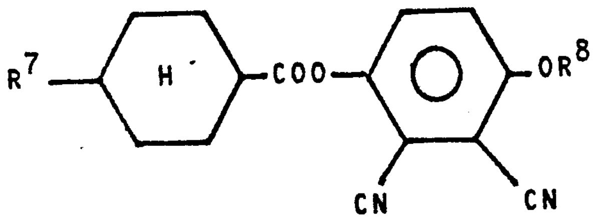 (IV)

dans laquelle $R^7$ et $R^8$ qui peuvent être identiques ou différents, sont des radicaux alkyle de 1 à 7 atomes de carbone, et

d) les bicyclohexylcarbonitriledialkyle répondant à la formule :

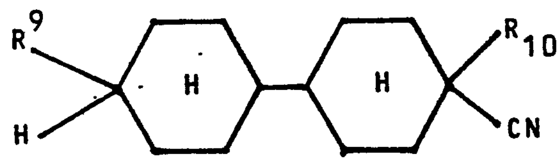 (V)

dans laquelle $R^9$ et $R^{10}$ qui peuvent être identiques ou différents, sont des radicaux alkyle ou alkylène de 1 à 7 atomes de carbone ;

ledit mélange comprenant :

- de 30 à 90 % en poids au total de la ou des bases de Schiff,
- de 0 à 60% au total du ou des alkylbicyclooctane carboxylates d'alkylfluorophényle,
- de 0 à 25% au total du ou des biphénylbicyclohexyldialkyle,
- de 0 à 12% au total du ou des alkylcyclohexylcarboxylates de dicyanoalcoxyphényle, et
- de 0 à 40% au total du ou des bicyclohexylcarbonitriledialkyle.

Grâce à l'association d'au moins une base de Schiff avec un ou plusieurs composés choisis parmi les composés a), b), c) et d) mentionnés ci-dessus, on obtient une composition de cristal liquide présentant le meilleur compromis entre tous les paramètres des différents constituants entrant dans le mélange.

Les différents constituants du mélange sont pour la plupart des produits connus, et ils peuvent être préparés par des procédés classiques.

Ainsi. les bases de Schiff peuvent être préparées en utilisant la méthode décrite par H. Kelker et B. Scheurle dans Angew. Chem. Internat. Edit./ vol.8 (1969) n°11, p.884-885. A titre d'exemples de bases de Schiff susceptibles d'être utilisées dans l'invention, on peut citer la p-méthoxy-benzylidène, p'-butylaniline (MBBA) de formule :

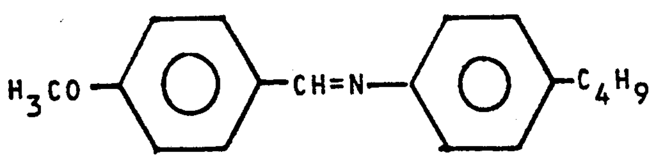 (VI)

et la p-éthoxybenzylidène, p'-butylaniline (EBBA) de formule :

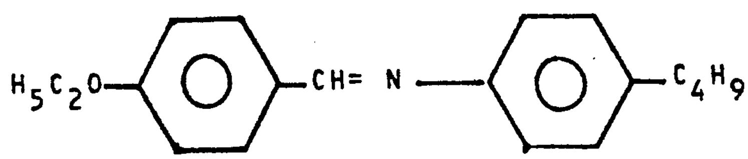 (VII)

qui sont toutes deux décrites dans le document précité.

Les alkylbicyclooctane carboxylates d'alkylfluorophényle peuvent être préparés par la méthode décrite par G.W.Gray et S.M.Kelly dans Mol. Cryst. Liq. Cryst. (1981), vol.75, p.109-119.

A titre d'exemples de composés de ce type susceptibles d'être utilisés, on peut citer le 4-n-pentyl-bicyclooctane carbcxylate de 2-fluoro-4-n-pentylphényle (BCO55F) de formule :

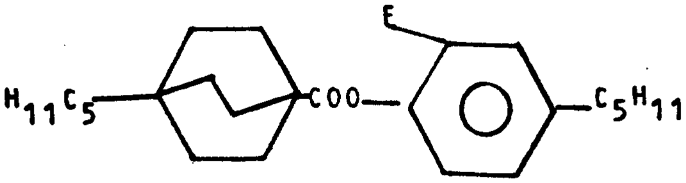

(VIII)

et le 4-n-pentyl-bicyclooctane carboxylate de 2-fluoro-4-n-heptylphényle (BCO57F) de formule :

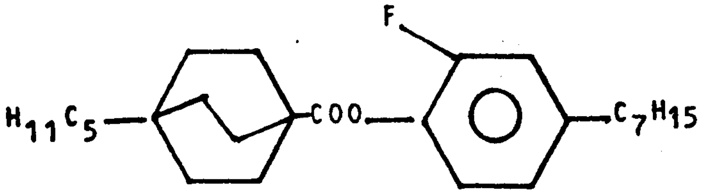

(IX)

Les biphényl bicyclohexyldialkyle peuvent être préparés par la méthode décrite par R. Eidenschink D. Erdmann, J.Krause et L.Pohl dans Angew chem. 89 103 (1977).

A titre d'exemple de tels composés, on peut citer le 4-(trans-4 -n-pentylcyclohexyl)-4'-(trans-4-n-propylcyclohexyl) biphényle(CBC53) de formule :

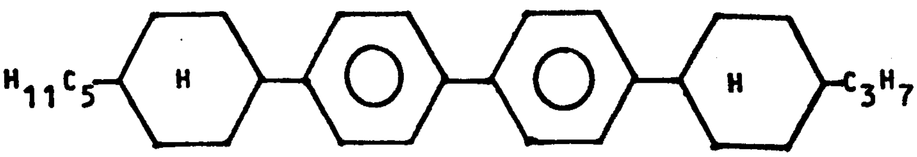

(X)

Les alkylcyclohexylcarboxylates de dicyanoalkoxyphényle peuvent être préparés par les techniques décrites par K. Wallenfels, G. Bachmann, D.Hofmann et R. Kern dans Tetrahedron, (1965), vol.21, p.2239 à 2256. Le composé II (page 2241) de cet article

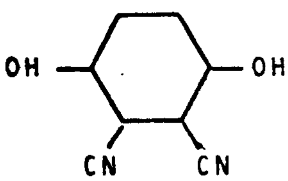

est traité par un chlorure d'acide d'un alkyl cyclohexyl R - 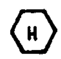 -COCl qui donne

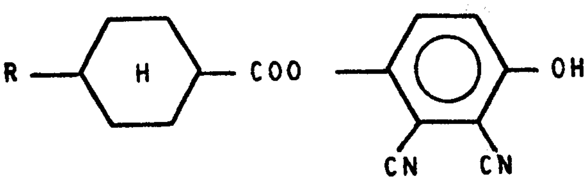

ce dernier composé est ensuite traité par un bromure d'alkyle qui conduit au dérivé

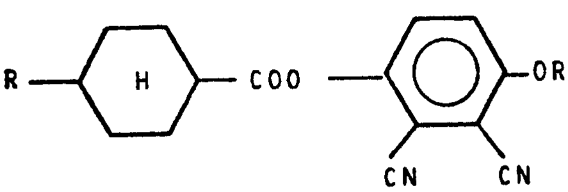

A titre d'exemple d'un tel composé, on peut citer le trans-4-n-pentylcyclohexyl-1-carboxylate de 4-n-butoxy -2,3-dicyanophényle (5HENO4) de formule :

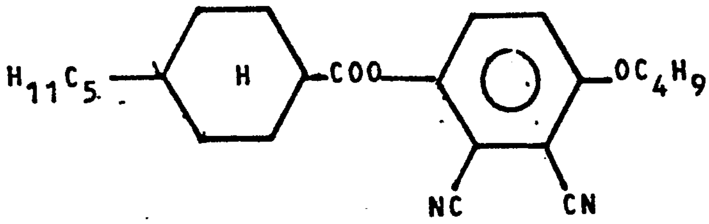 (XI)

Les bicyclohexylcarbonitriledialkyle peuvent être préparés par la méthode décrite par R.Eidenschink, G.Haas, M.Römer et B.S. Scheuble dans Angew Chem. 96 (1984) n°2 p.151.

A titre d'exemples de tels composés, on peut citer le 4 α n-heptyl, 4'α n-butyl-1 α, 1' α bicyclohexyl-4 β carbonitrile (CCN47) de formule :

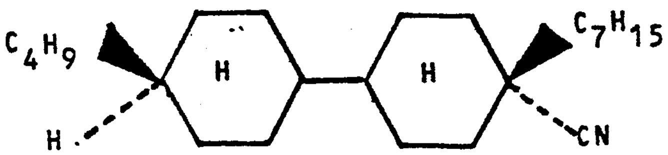 (XII)

et le 4α, 4'α di-n-pentyl-1 α, 1'α bicyclohexyl 4-β carbonitrile (CCN55) de formule :

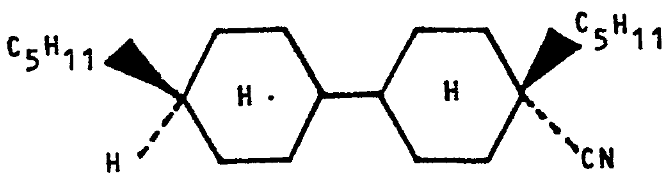 (XIII)

Généralement, les mélanges entrant dans la composition du cristal liquide de l'invention, comprennent plusieurs constituants, en particulier plusieurs bases de Schiff et plusieurs constituants choisis parmi les composés a), b), c) et d).

Selon un mode préféré de réalisation de l'invention, le mélange comprend :

- 19 à 44% en poids de p-méthoxybenzylidène, p'-butylaniline(MBBA),
- 18 à 28% en poids de p-éthoxybenzylidène, p'-butylaniline (EBBA),
- 0 à 17% en poids de 4-n-pentylbicyclooctane carboxylate de 2-fluoro-4-n-pentylphényle (BC055F),
- 1,5 à 16% en poids de 4 α, 4'α-di-n-pentyl-1-alpha, 1'α bicyclohexyle-4 β carbonitrile (CCN55), et
- 19 à 26,5% en poids de 4 α-n-heptyl, 4' α-n-butyl-1 α, 1' α bicyclohexyl-4 β carbonitrile (CCN47).

Selon un autre mode de réalisation préféré de l'invention, le mélange comprend :

- 34 à 40% en poids de p-méthoxybenzylidène, p'-butylaniline (MBBA),
- 23 à 26% en poids de p-éthoxybenzylidène, p'-butylaniline (EBBA),
- 15 à 26% en poids de 4-n-pentylbicyclooctane carboxylate de 2-fluoro-4-n-pentylphényle (BCO55F),
- 0 à 10% en poids de 4-n-pentylbicyclooctane carboxylate de 2-fluoro-4-n-heptylphényle (BCO57F),
- 6 à 10% en poids de 4-(trans-4-n-pentylcyclohexyl-4'-trans-4-n-propylcyclohexylbiphényle (CBC53),
- 0 à 4% en poids de trans-n-pentylcyclohexane carboxylate de 4-n-butoxy-2,3 dicyanophényle (5HENO4).

Les mélanges de cristaux liquides de l'invention peuvent être utilisés comme éléments actifs dans les dispositifs à cristaux liquides mettant en jeu l'effet de biréfringence contrôlée électriquement.

D'autres caractéristiques et avantages de l'invention apparaîtront mieux à la lecture des exemples suivants donnés bien entendu à titre illustratif et non limitatif.

Exemple 1

On prépare un mélange de cristaux liquides comportant 47,7% en poids de EBBA de formule (VII) et 52,3% en poids de BCO 55F de formule (VIII). On obtient ainsi un mélange de cristaux liquides présentant une phase mésomorphe nématique dans la gamme de températures allant de 5°C à 72°C.

On mesure l'anisotropie diélectrique Δε, l'anisotropie optique Δn et le rapport $K_{33}/K_{11}$ du mélange obtenu par des méthodes classiques et l'on obtient les valeurs suivantes :

- Δn = 0,158,
- Δε = - 0,6,
- $K_{33}/K_{11}$ = 1,38.

Exemple 2

On prépare comme dans l'exemple 1, un mélange de cristaux liquides comprenant 59,3% en poids de MBBA de formule (VI) et 40,7% en poids de BCO55F de formule (VIII).

Les mesures effectuées comme dans l'exemple 1 pour déterminer la gamme de mésomorphisme du

mélange l'anisotropie optique $\Delta n$, l'anisotropie diélectrique $\Delta\varepsilon$ la valeur du rapport $K_{33}/K_{11}$ ont conduit aux résultats suivants :
- gamme de mésomorphisme : 0 à 50°C,
- anisotropie optique : $\Delta n$ = 0,153,
- anisotropie diélectrique $\Delta\varepsilon$ = -0,53,
- rapport $K_{33}/K_{11}$ = 1,32.

Exemple 3

On prépare comme dans l'exemple 1, un mélange de cristaux liquides comprenant 44% en poids de MBBA de formule (VI), 28% en poids de EBBA de formule (VII), 1,5% en poids de CCN55 de formule (XIII), et 26,5% en poids de CCN47 de formule (XII). Ce mélange présente les caractéristiques suivantes déterminées comme dans l'exemple 1.
- intervalle de mésomorphisme nématique : -9 à 58°C,
- anisotropie optique : $\Delta n$ = 0,14,
- anisotropie diélectrique : $\Delta\varepsilon$ : -1,9,
- $K_{33}/K_{11}$ = 1,08.

Exemple 4

On prépare comme dans l'exemple 1, un mélange de cristaux liquides ayant la composition suivante :
- 30% en poids de MBBA de formule (VI),
- 18% en poids de EBBA de formule (VII),
- 17% en poids de BCO55F de formule (VIII),
- 19% en poids de CCN47 de formule (XII), et
- 16% en poids de CCN55 de formule (XIII).

Les caractéristiques de ce mélange de cristaux liquides sont les suivantes :
- intervalle de mésomorphisme nématique : -20 à 57,8°C,
- anisotropie optique : $\Delta n$ = 0,12,
- anisotropie diélectrique : $\Delta\varepsilon$ = -3,
- $K_{33}/K_{11}$ = 1,07.

Exemple 5

Dans cet exemple, on prépare comme dans l'exemple 1, un mélange de cristaux liquides ayant la composition pondérale suivante :
- 40% de MBBA de formule (VI),
- 25,4% de EBBA de formule (VII),
- 25,2% de BCO55F de formule (VIII),
- 7,7% de CBC53 de formule (X), et
- 1,7% de 5HENO4 de formule (XI).

Ce mélange présente les caractéristiques suivantes :
- intervalle de mésomorphisme nématique : -12 à 78,7°C,
- anisotropie optique : $\Delta n$ = 0,2,
- anisotropie diélectrique : $\Delta\varepsilon$ = -1,
- $K_{33}/K_{11}$ : 1,34.

Exemple 6

On prépare comme dans l'exemple 1, un mélange de cristaux liquides ayant la composition suivante :
- 34.7% en poids de MBBA de formule (VI),
- 23,1% en poids de EBBA de formule (VII),
- 33,3% en poids d'un mélange eutectique BCO55F/BCO57F de formule (VIII et IX),
- 6,3% en poids de CBC53 de formule (X), et
- 2,6% en poids de 5HENO4 de formule (XI).

Ce mélange de cristaux liquides présente les caractéristiques suivantes :
- intervalle de mésomorphisme nématique : -16 à 76°C,
- anisotropie optique : $\Delta n$ : 0,191,
- anisotropie diélectrique : $\Delta\varepsilon$ : -1,
- $K_{33}/K_{11}$ : 1,26.

A titre de comparaison on donne ci-après les caractéristiques physiques de quelques cristaux utilisés dans la réalisation de l'invention.

| Cristal liquide | Intervalle de mésomorphisme nématique | anisotropie optique $\Delta n$ | anisotropie diélectrique $\Delta \epsilon$ | $K_{33}/K_{11}$ |
|---|---|---|---|---|
| Base de Schiff MBBA/EBBA | 0 - 58°C | 0,23 | -0,45 | 1,39 |
| Alkylbicyclooctane carboxylate d'alkyl fluorophényle BC055F | 26,3 à 64°C | 0,06 | -0,72 | 1,35 |
| Bicyclohexylcarbonitrile dialkyle CCN47 | 30,8 à 58,4°C | 0,03 | -7 | 2,0 |

**Revendications**

1. Mélange de cristaux liquides nématiques, caractérisé en ce qu'il est constitué par :
- au moins une base de Schiff répondant à la formule :

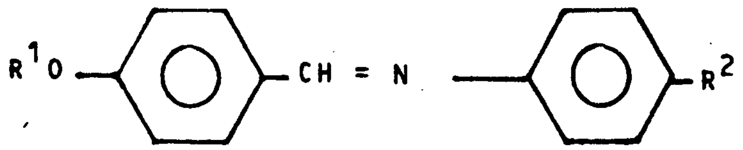
(I)

dans laquelle $R^1$ et $R^2$ qui peuvent être identiques ou différents, sont des radicaux alkyle de 1 à 7 atomes de carbone, et
- au moins un composé choisi parmi :

a) les alkyl bicyclooctane carboxylates d'alkyl fluorophényle de formule :

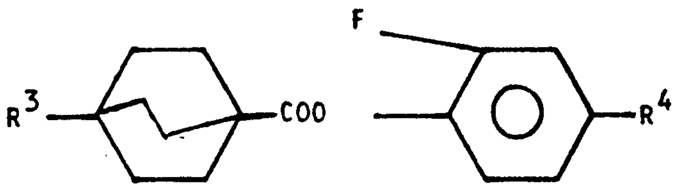
(II)

dans laquelle $R^3$ et $R^4$ qui peuvent être identiques ou différents, sont des radicaux alkyle de 1 à 7 atomes de carbone,

b) les biphénylbicyclohexyldialkyle de formule :

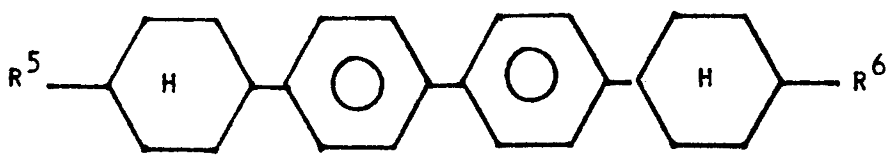
(III)

dans laquelle $R^5$ et $R^6$ sont des radicaux alkyle de 1 à 7 atomes de carbone,

c) les alkylecyclohexylcarboxylates de dicyanoalcoxyphényle répondant à la formule :

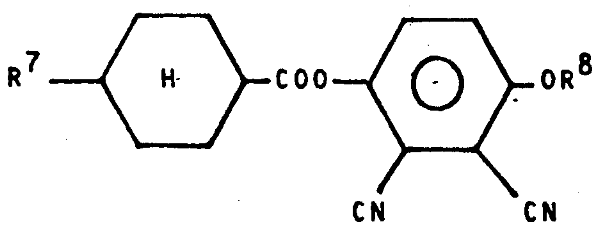
(IV)

dans laquelle $R^7$ et $R^8$ qui peuvent être identiques ou différents, sont des radicaux alkyle de 1 à 7 atomes de carbone, et

d) les bicyclohexylcarbonitriledialkyle répondant à la formule :

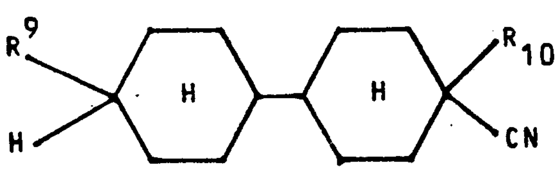
(V)

dans laquelle $R^9$ et $R^{10}$ qui peuvent être identiques ou différents, sont des radicaux alkyle ou alkylène de 1 à 7 atomes de carbone ;

ledit mélange comprenant :
- de 30 à 90 % en poids au total de la ou des bases de Schiff,
- de 0 à 60% au total du ou des alkylbicyclooctane carboxylates d'alkylfluorophényle,
- de 0 à 25% au total du ou des biphénylbicyclohexyldialkyle,
- de 0 à 12% autotal du ou des alkylcyclohexylcarboxylates de dicyanoalcoxyphényle, et
- de 0 à 40% au total du ou des bicyclohexylcarbonitrile dialkyle.

2. Mélange de cristaux liquides selon la revendication 1, caractérisé en ce que la base de Schiff est la p-méthoxybenzylidène, p'-butylaniline ou la p-éthoxybenzylidène, p'-butylaniline.

3. Mélange de cristaux liquides selon l'une quelconque des revendications 1 et 2, caractérisé en ce que l'alkylbicyclooctane carboxylate d'alkylfluorophényle est le 4-n-pentylbicyclooctane carboxylate de 2-fluoro-4-n-pentylphényle ou le 4-n-pentylbicyclooctane carboxylate de 2-fluoro-4-n-heptylphényle.

4. Mélange de cristaux liquides selon l'une quelconque des revendications 1 à 3, caractérisé en ce que le biphénylbicyclohexyldialkyle est le 4-(trans-4-n-pentylcyclohexyl)-4'-trans-4-n-propylcyclohexylbiphényle.

5. Mélange de cristaux liquides selon l'une quelconque des revendications 1 à 4, caractérisé en ce que l'alkylcyclohexylcarboxylate de dicyanoalcoxyphényle est le trans-4-n-pentylcyclohexyl-1-carboxylate de 4-n-butyloxy-2,3 dicyanophényle.

6. Mélange de cristaux liquides selon l'une quelconque des revendications 1 à 5, caractérisé en ce que le bicyclohexylcarbonitrile dialkyle est le 4 α-n-heptyl, 4'α n-butyl-1 α, 1' α bicyclohexyl, 4 β-carbonitrile ou le 4α, 4'α di-n-pentyl-1α, 1'α bicyclohexyl-4 β carbonitrile.

7. Mélange de cristaux liquides selon la revendication 1, caractérisé en ce qu'il comprend 47,7% en poids de p-éthoxybenzylidène, p'-butylaniline (EBBA) et 52,3% en poids de 4-n-pentylbicyclooctane carboxylate de 2-fluoro-4-n-pentylphényle (BCO55F).

8. Mélange de cristaux liquides selon la revendication 1, caractérisé en ce qu'il comprend 59,3% en poids de p-méthoxybenzylidène, p'-butylaniline (MBBA) et 40,7% en poids de 4-n-pentylbicyclooctane carboxylate de 2-fluoro-4-n-pentylphényle (BCO55F).

9. Mélange de cristaux liquides selon la revendication 1, caractérisé en ce qu'il comprend :
- 19 à 44% en poids de p-méthoxybenzylidène, p'-butylaniline (MBBA),
- 18 à 28% en poids de p-éthoxybenzylidène, p'-butylaniline (EBBA),
- 0 à 17% en poids de 4-n-pentylbicyclooctane carboxylate de 2-fluoro-4-n-pentylphényle (BCO55F),
- 1,5 à 16% en poids de 4α, 4'α-di-n-pentyl-1-α, 1'α-bicyclohexyle-4 βcarbonitrile (CCN55), et
- 19 à 26,5% en poids de 4 α-n-heptyl, 4' α-n-butyl-1 α, 1'α bicylohexyl 4 β carbonitrile (CCN47).

10. Mélange de cristaux liquides selon la revendication 1, caractérisé en ce qu'il comprend :
- 34 à 40% en poids de p-méthoxybenzylidène, p'-butylaniline (MBBA),
- 23 à 26% en poids de p-éthoxybenzylidène, p'-butylaniline (EBBA),
- 15 à 26% en poids de 4-n-pentylbicyclooctane carboxylate de 2-fluoro-4-n-pentylphényle (BCO55F),
- 0 à 30% en poids de 4-n-pentylbicyclooctane carboxylate de 2-fluoro-4-n-heptylphényle (BCO57F),
- 6 à 10% en poids de 4-(trans-4-n-pentylcyclohexyl)-4'-trans-4-n-propylcyclohexylbiphényle (CBC53),
- 0 à 4% en poids de trans-n-pentylcyclohexane carboxylate de 4-n-butoxy-2,3 dicyanophényle (5HENO4).

11. Dispositif à cristal liquide mettant en jeu l'effet de biréfringence contrôlé électriquement caractérisé en ce qu'il comprend un mélange de cristaux liquides obtenu selon l'une quelconque des revendications 1 à 10.

Office européen des brevets

# RAPPORT DE RECHERCHE EUROPEENNE

Numéro de la demande

EP 86 40 1861

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 058 512 (SECRETARY OF STATE DEFENCE) * Page 9, lignes 18-23; page 10, lignes 15,19,32; revendications 1,15-17 * | 1 | C 09 K 19/48 |
| | --- | | |
| Y | GB-A-2 134 110 (SECRETARY OF STATE DEFENCE) * Page 17, lignes 31-34; page 18, ligne 5; page 19, lignes 9-14; page 13, lignes 8-10; page 14, ligne 6; page 15, lignes 1-4,11; page 17, lignes 31-34; page 18, ligne 5; page 19, lignes 9-14 * & GB-A-2 133 795 | 1 | |
| | ----- | | |

DOMAINES TECHNIQUES RECHERCHES (Int. Cl.4)

C 09 K 19/00

Le présent rapport de recherche a été établi pour toutes les revendications

| Lieu de la recherche | Date d'achèvement de la recherche | Examinateur |
|---|---|---|
| LA HAYE | 28-11-1986 | BOULON A.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82